(19) **Europäisches Patentamt**
**European Patent Office**
**Office européen des brevets**

(11) **EP 2 294 735 B1**

(12) **EUROPEAN PATENT SPECIFICATION**

(45) Date of publication and mention
of the grant of the patent:
**17.10.2018 Bulletin 2018/42**

(51) Int Cl.:
***H04J 3/06*** (2006.01)

(21) Application number: **09767673.8**

(22) Date of filing: **17.06.2009**

(86) International application number:
**PCT/US2009/047692**

(87) International publication number:
**WO 2009/155364 (23.12.2009 Gazette 2009/52)**

(54) **SELF-POSITIONING ACCESS POINTS**

SELBSTPOSITIONIERENDE ZUGANGSPUNKTE

POINTS D'ACCÈS À POSITIONNEMENT AUTOMATIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **17.06.2008 US 140634**

(43) Date of publication of application:
**16.03.2011 Bulletin 2011/11**

(60) Divisional application:
**13020042.1**

(73) Proprietor: **Qualcomm Incorporated
San Diego, CA 92121 (US)**

(72) Inventors:
• **SHEYNBLAT, Leonid
San Diego, CA 92121 (US)**

• **HESHMATI, Ardalan
San Diego, CA 92121 (US)**

(74) Representative: **Schmidbauer, Andreas Konrad
Wagner & Geyer Partnerschaft
Patent- und Rechtsanwälte
Gewürzmühlstrasse 5
80538 München (DE)**

(56) References cited:
**WO-A-03/058863**     **WO-A-2008/051123
US-A1- 2004 072 582**

• **DAVID L MILLS: "Adaptive Hybrid Clock
Discipline Algorithm for the Network Time
Protocol" IEEE / ACM TRANSACTIONS ON
NETWORKING, IEEE / ACM, NEW YORK, NY, US,
vol. 6, no. 5, 1 October 1998 (1998-10-01),
XP011039158 ISSN: 1063-6692**

**Description**

**BACKGROUND**

The operation of a mobile communication device (hereinafter referred to as a mobile station) is sometimes compromised by the inability to establish a good communication link with a base transceiver station (BTS). This may be especially problematic within a closed-in environment such as a building in an urban setting with surrounding tall buildings. Failure to obtain a good communications link deprives the mobile station user of many of the services available through the mobile station such as the ability to determine the geographic position of the mobile station, etc. Mobile phones have had the capability of using alternate communication methods in the past such as those allowing the use of the Advanced Mobile Phone Service (AMPS), an analog system, when a digital communication system is unavailable within a geographic area. However, even AMPS systems are subject to a poor communication link with a BTS.

Wireless Local Area Networks (WLANs) enable users of wireless devices to wirelessly connect to an access point (e.g., hotspot) which often acts as a bridge connecting a wireless network to the Internet through a Wide Area Network (WAN) provided by an Internet Service Provider (ISP). Wi-Fi networks typically use one or more crystal oscillator reference clocks which may, for instance, clock data exchanged between an ISP's WAN and a WLAN device connected wirelessly to an access point. The reference clock at the access point typically employs a voltage controlled oscillator using a crystal clock. Low phase noise and frequency stability provided by the reference clock is necessary to ensure wireless communication between client devices and the access point. Nevertheless, reference clocks will drift which affects the proper synchronization of WLAN devices.

A need exists to ensure minimal reference clock drift and properly maintained absolute time for WLAN reference clocks. These requirements are especially important for mobile devices such as mobile phones in order to allow them to properly sync up with an ad hoc network through a hotspot.

Lately, phones have been developed with capability to access wireless local area networks. In addition, locating property, people (including employees), etc. has become a matter of increased importance over the last several years, especially where it involves doing so through the medium of a mobile phone. Several technologies are available and have been proposed for mobile station position determination ranging from use of a Satellite Positioning System (SPS), proximity methods and propagation and time of arrival measurements in addition to other network-based solutions. As used herein, a mobile station (MS) refers to a device such as a cellular or other wireless communication device, personal communication system (PCS) device, personal navigation device, laptop or other suitable mobile device capable of receiving and processing SPS signals. The term "mobile station" is also intended to include devices which communicate with a personal navigation device (PND), such as by short-range wireless, infrared, wireline connection, or other connection - regardless of whether satellite signal reception, assistance data reception, and/or position-related processing occurs at the device or at the PND. Also, "mobile station" is intended to include all devices, including wireless communication devices, computers, laptops, etc. which are capable of communication with a server, such as via the Internet, WiFi, or other network, and regardless of whether satellite signal reception, assistance data reception, and/or position-related processing occurs at the device, at a server, or at another device associated with the network. Any operable combination of the above are also considered a "mobile station."

Fingerprinting provides one approach to determining the position of a mobile station. Radio frequency signal characteristics associated with various regions in a signal transmission area are collected in a database. Each grouping of signal characteristics for a region is known as a fingerprint. Typically, the position of a mobile station is determined by comparing a RF data sample collected by the mobile station to fingerprint data in the database. The mobile station's position is determined to lie in the area corresponding to a fingerprint data point of highest correlation to the RF data sample.

Received signal strength intensity (RSSI) has been used in connection with network planning and fingerprinting. Radio network sample points are collected from different site locations. Each sample point contains RSSI data together with related map coordinates which are stored in a database for position tracking of persons, assets, equipment, etc. within a Wi-Fi network (IEEE 802.11 a/b/g), WiMAX network (IEEE 802.16), etc. These networks may use a program running on a server that calculates position determinations and interacts with a client device (i.e., laptop computer, personal digital assistant (PDA), Wi-Fi Tag, etc.) in connection with an application program for recording field data (e.g., RSSI data). The position determination data returned may include the speed, heading, building floor and grid location of a client device. For larger scale applications, a mobile phone's location may be determined using RSSI measurements for trilateration made in connection with data measured from several access points.

When WLAN base stations (also known as Access Points for IEEE 802.11 networks) are used in connection with mobile station position determination, with the exception of signature-based methods, accurate knowledge of the base station location is necessary in connection with using many of the foregoing described position determination methodologies. In fact, knowledge of access point positioning may have a profound effect on the overall functionality of a mobile station. An important consideration centers on accurate timing information and synchronization in connection with the receipt of packet information in a packet network.

A need exists to provide accurate and synchronized timing to a mobile station even in the event of an otherwise unsuitable or unavailable communication link with a BTS.

Further attention is drawn to the document US 2004/072582 A1 describes a method and system for synchronizing location finding measurements in a wireless local area network (WLAN). Multiple location receivers compute the time-of-arrival (TOA) of a reference transmitter signal, which is generally a beacon signal. The TOAs are collected and reported to a master unit that contains stored predetermined position information for the location receivers. The master unit computes the time-differences-of-arrival (TDOA) between multiple receivers and computes differences between the measured TDOAs and theoretical TDOAs computed in conformity with the predetermined position of each location receiver.; The deviations between theoretical and measured TDOAs are collected in a statistical sample set and Kalman filters are used to produce a model of location receiver timebase offset and drift over multiple received beacon signals.

The document WO 03/058863 A describes a method and apparatus for providing accurately synchronised timing signals at mutually distant locations employs a GPS or similar receiver at each location. These receivers are interconnected by a communications network, and exchange data over network to agree a common timing reference.

The document WO 20078/051123 A describes methods and mechanisms for adaptive clock recovery of a service clock (fs) of a constant bit rate, CBR, service transmitted as a stream of data packets (P(i)) over a packet network from a sending end node (S) to a receiving end node (R), via at least one intermediate node (T).

SUMMARY

In accordance with the present invention, an apparatus as set forth in claim 1, and a method as set forth in claim 10 are provided. Further embodiments of the invention are claimed in the dependent claims.

**BRIEF DESCRIPTION OF THE DRAWINGS**

FIG. 1 illustrates a block diagram of a system implementing a Kalman Filter, in connection with synchronization of an access point.
FIG. 2 illustrates a flowchart illustrating the operation of the recursive filter in the calibration of the access point clock and the synchronization of the access point time signals in connection with the NTP time signals received over the Internet
FIG. 3 illustrates a diagram of a system employing a website for mobile station position determination and navigation. Reference numbers have been carried forward.

**DETAILED DESCRIPTION**

Methodologies are provided herein for enabling timing synchronization and obtaining accurate timing information for a mobile station in instances in which a wireless communication link is either not available or inadequate with a BTS using the mobile station's primary communication resources. In this regard, a secondary communication link using a Wi-Fi (e.g., IEEE 802.11) or Bluetooth connection to WLAN or Personal Area Network (PAN) base station may be relied upon for connection to the Internet using an Internet protocol (IP). Throughout herein, WiFi and 802.11 are considered and used interchangeably. Mobile stations having dual digital and AMPS capability have been contemplated and would benefit from the disclosure herein.

Given that the internal reference clock located at an access point (which may include, for instance a Digital Subscriber Line (DSL) Modem and a DSL port and/or a cable modem) is subject to drift, one method for maintaining proper clock timing involves synchronizing the clock with a reliable outside time source.

Accurate timing synchronization for the access point clock may be derived from timing information received through the access point from the ISP's WAN which may be connected to a server implementing the Network Time Protocol (NTP). NTP uses Marzullo's algorithm with the Coordinated Universal Time (UTC) time scale, including support for features such as leap seconds. NTP version 4 (NTPv4) has been shown to maintain time to within 10 milliseconds over the Internet. Further, NTP can achieve accuracies to within 200 microseconds or better in some instances running on a local area network. NTP is implemented using a hierarchical system of clock strata. The stratum levels define the distance in the hierarchical scheme from the reference clock and the associated accuracy. Timing drift at stratum 1 devices may be less than that at other strata. Nevertheless, drift will result when sourcing timing information from various clock stratum levels.

In connection with establishing proper functionality of a mobile station connected by a wireless link to an 802.11 network access point, synchronization of the access point clock oscillator may occur with the accurate time provided over the Internet.

Techniques may be used to model clock error such as those disclosed by E. Filho, H. Kuga and R. Lopes. 2003 in Real Time Estimation of GPS Receiver Clock Offset by the Kalman Filter, Proceedings of COBEM 2003, 17th International Congress of Mechanical Engineering, which is hereby incorporated by reference.

As disclosed by Filho, Kuga and Lopes, as referenced above, a recursive filter such as a Kalman filter may be used to synchronize a clock. Therefore such a filter may be used to synchronize an access point clock with the NTP time provided through the Internet. The Kalman filter may present a real time state estimation problem as a set of mathematical equations for which a recursive solution is available. Consequently, the Kalman filter is a recursive estimator which estimates the current state from the previous time step and current measurements. It uses a predict phase and an update phase. The predict phase uses the state estimate from the previous time step to produce an estimate of the state at the current time step. In the update phase, measurement information at the current time step is used to refine this prediction to arrive at a new state estimate which is intended to have greater accuracy, again for the current time step.

At time k an observation (or measurement) $y_k$ of the true state $\mathbf{x}_k$ of the NTP clock signal is made according to

$$y_k = \mathbf{H}_k x_k + \mathbf{v}_k$$

where $\mathbf{v}_k = \mathbf{N}(0, \mathbf{R}_k(t))$

$\mathbf{H}_k$, is a m x n observation matrix for each time step k, that provides a state transition model for the previous state $\mathbf{x}_{k-1}$. Consequently, it maps the true state space into the observed space.

$\mathbf{v}_k$ is the observation white noise which is assumed to have a Gaussian distribution with zero mean and covariance matrix $\mathbf{R}_k(t)$.

The predicted state is defined as

$$\hat{x} = \mathbf{F}x$$

with covariance matrix P and

$\mathbf{F}$ being a state transition model applied to the previous state. By differencing the time of arrival of timing pulses, a timing drift of an external source can be computed. This is reflected in the model for the update equations state which is as follows:

$$\Delta_k = y_k - \mathbf{H}_k \hat{x}_k$$

where $\Delta_k$ represents the measurement residual by which the predicted state determined from the previous measured state differs from the current measured state.

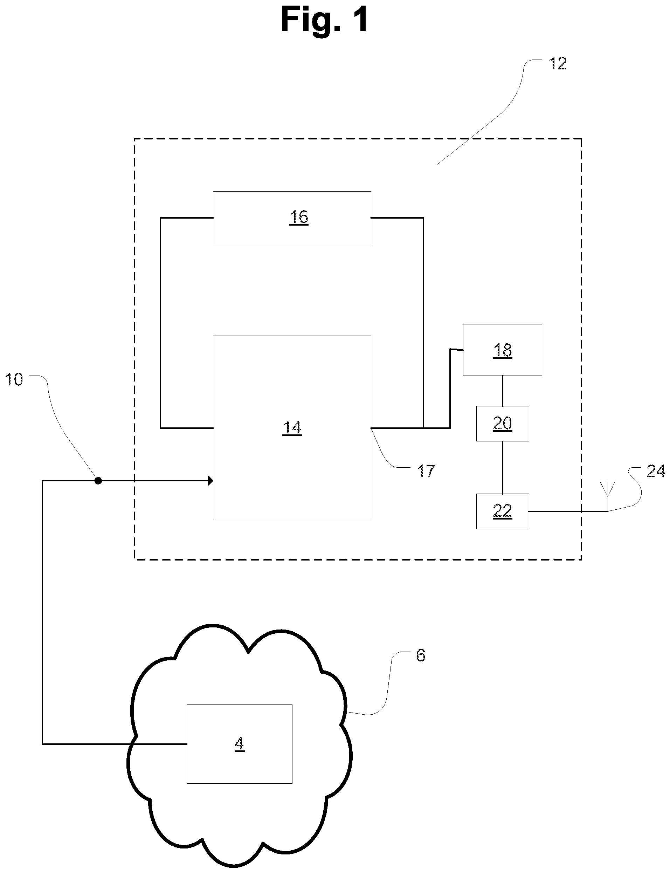

With reference to **Fig. 1**, which illustrates a block diagram of a system implementing a Kalman Filter, a time signal from a NTP server **4** is transmitted through an ISP's WAN **6** using the Internet. Input **10** of access point **12,** which receives the time signal and inputs it to filter section **14** which determines the predicted state of the time signal. Filter sections **14** and **16** collectively form a Kalman Filter. Filter section **16** determines the update equations state for feedback of the measurement residual to filter section **14**. This process continues, resulting in what is intended to be successively better clock pulse predictions for synchronization of the access point's internal frequency source **18** (e.g., a crystal oscillator) with the clocking signals received through the Internet. In effect, the access point frequency source **18** (or clock) may be self-positioning. From time to time, the filter output at **17** from filter section **14**, with contribution from feedback through filter section **16**, is used to calibrate, using processor **22**, and internal frequency source **18** which clocks signals through transceiver 20. This calibration may occur continuously.

Alternatively, processor **22** may represent a hardware device. An effective NTP time source may be effectively provided at a WLAN access point, thereby enabling proper mobile station functionality especially in instances where a connection with a primary network is not possible and where a WI-Fi network is relied upon for communications involving devices connecting to access point **12** through antenna **24**.

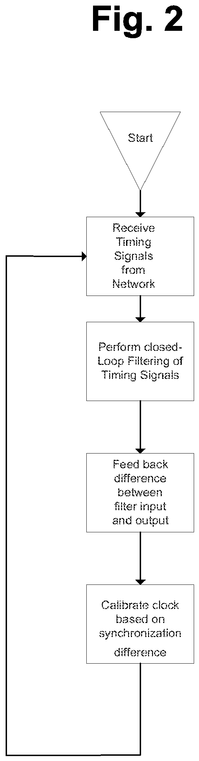

FIG. **2** is a flowchart illustrating the operation of the recursive filter in the calibration of the access point clock and the synchronization of the access point time signals with the NTP time signals received over the Internet. The received network time signal is closed-loop filtered until the difference between filter output and input becomes zero. The access point clock is calibrated based on this information. This methodology continues as newly received network time signals are input to the filter

Once the mobile station connects, via Wi-Fi link, to an access point within, for instance, a building, a substantial amount of functionality can be restored to the mobile station despite the fact that a communication link is not possible through a primary communication methodology using for instance, Code Division Multiple Access (CDMA), Wideband Code Division Multiple Access (WCDMA), Time Division Multiple Access (TDMA), Global System for Mobile Communications (GSM), AMPS, Frequency Division Multiple Access (FDMA), etc. This functionality may be greatly enhanced with the foregoing synchronization scheme which also allows an enhanced knowledge of the access point clock's absolute time and timing drift. For instance, position determination of and navigation with a mobile station may be greatly facilitated through synchronization and knowledge of absolute timing acquired through use of the foregoing Kalman filtering scheme using several methods. Assuming that the mobile station has established a communication link through a fixed-location access point, the mobile station's location position may be approximated as that of the access point. Alternatively, the mobile station's position may be determined using time of arrival, RSSI, etc. methods. Still alternatively, the mobile station's position may be determined using the afore-mentioned methods including instances where the access point is itself mobile and not fixed.

In some aspects, mobile station position determination and mobile navigation requests may be handled in connection with directing navigation related requests to a website wherein a program may make navigation and position determinations based upon data collected through an Internet or an intranet connection to the access point.

Entry through an access point may only be provided to selected users. For instance, subscribers to a given phone service, e.g., Verizon®, Sprint®, etc. may be the only ones allowed to connect to a WAN through an access point. Since the 802.11 network may take the mobile station off-line from the conventional billing mechanism, billing for services in connection with the 802.11 network may occur using a variety of methods based on ad hoc service requests, monthly rates for a package of services, etc. Alternatively, a connection through an access point may be made to a virtual private network based on various criteria.

Voice and other data communications may be conducted using the Wi-Fi connection to an access point using the Internet, as further facilitated by the foregoing Kalman filtering scheme. Additionally, a handoff scheme may be used to switch a call in service to a primary communication network once wireless communications with that network become available.

In some aspects, position determination for a mobile station may occur based on time of arrival (TOA) ranging wherein measurement occurs of the arrival time, at the mobile station receiver, of a known signal that has been transmitted at a known time from an access point. The difference between the arrival time and the transmitted time, i.e. the propagation time, of the known signal is multiplied by the speed of light in order to obtain the signal propagation distance between the signal emitter and the mobile station receiver, i.e., the emitter-to-receiver range. The position of the mobile station may be determined in connection with measuring the propagation time of signals broadcast from multiple signal emitters at access points at known locations. The signal propagation distance between each signal emitter and the mobile station receiver is commonly referred to as a pseudo range. Three such pseudo ranges provide three unknown position coordinates that may be determined in three simultaneous equations, thereby allowing the mobile station's position to be determined by well-known methods using trilateration.

A number of features executed by a mobile station with an active link to a BTS may be carried out by a mobile station connected to an 802.11 network such as Voice-Over Internet Protocol (VOIP) with many of its attendant features. With reference to **FIG. 1**, a processor (not shown) within mobile station **15** will cause mobile station **15** to change it's functionality from operation through a primary network involving a BTS to a secondary network using Wi-Fi in the event that connectivity to the primary network is unavailable. In addition, this processor (not shown) may shift mobile station **15** back to functionality through the primary network upon the establishment of a suitable communication link between mobile station **15** and the primary network. Further, mobile station position determination and navigation service may be offered through the mobile station in connection with the foregoing.

Although in one aspect, the position of the mobile station may be assumed to be the same as that of the known fixed position of the access point to which it is connected, should the mobile station receive signals from more than one access point, the location of the access point having the greatest received signal strength link with the mobile station may be used as indicating the position of the mobile station. Furthermore, knowledge of the transmit power can be sued to ascertain the distance traveled therefore placing the mobile station on the circle around the location of the access point with the radius equal to the distance traveled.

In another aspect, the position of the mobile station is determined in connection with signal analysis in relation to a plurality of access points using well known position determination techniques, e.g. trilateration and/or triangulation.

Position determination and navigation requests may require analysis utilizing resources outside of the mobile station. Consequently, should a position or navigation request be made from a mobile station not in contact with its primary network, the request may be handled through an access point using the Internet, the Internet including a Virtual Private Network (VPN), an Intranet or ATM through which an access point provides a connection. For instance, relevant signal data from the mobile station may be forwarded to an Internet Protocol (IP) address.

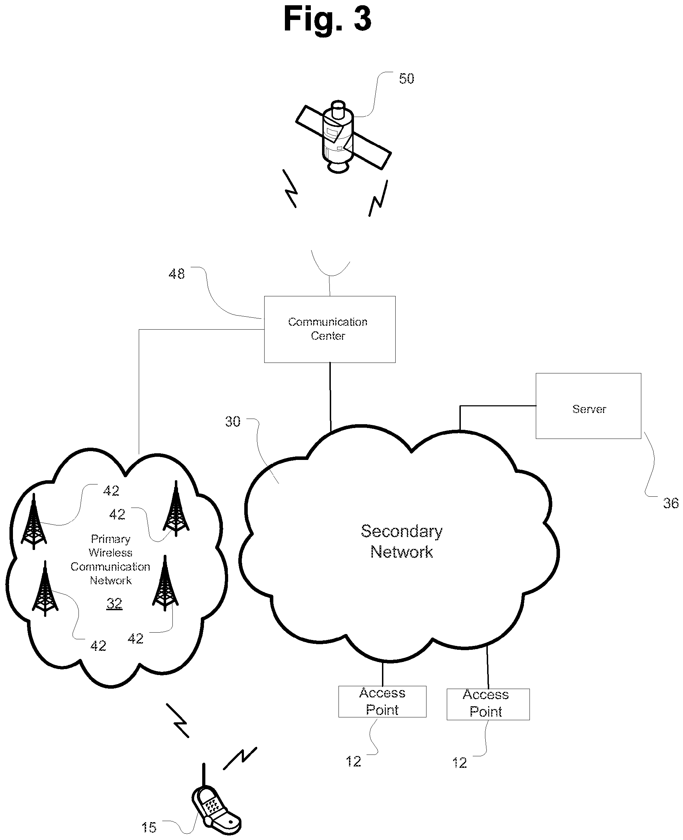

**FIG. 3** illustrates a diagram of a system employing a website for mobile station position determination and navigation. In connection with mobile station **15** being in communication with secondary network **30** rather than primary wireless communications network **32**, assuming that mobile station **15** has been synchronized with secondary network **30** according to one of the foregoing discussed methods, relevant signal data, e.g. RSSI, TOA information, etc. is forwarded to a designated IP address via, Internet, intranet and/or ATM through an access point **12**. The designated IP address may be that of server **36** which may be dedicated to handling position determination or navigation requests (i.e. step-by-step directions for traveling between a designated destination and a determined location or position). Server **36** may respond to position determination or navigation requests back through secondary network **30** through an access point **12** and/or it may respond through primary network **32** using a BTS **42** in event that mobile station **15** reestablishes contact with primary network **32**. In addition, communication center **48** may enable satellite communications through satellite **50** to supplement communications involving secondary network **30** and primary network **32**. Further, server **36** may handle aspects of mobile station feature requests and billing for service provided to mobile station **15**.

Position and navigation determinations may be made in connection with using RSSI, fingerprinting, trilateration, triangulation, etc. with the analysis of signals received at the mobile station or from the mobile station being performed at server **36** through the forwarding of data to an access point **12**. Position determination techniques described herein may be used for various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (WCDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and WCDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be used for any combination of WWAN, WLAN and/or WPAN.

The method and apparatus described herein may be used with various satellite positioning systems (SPS), such as the United States Global Positioning System (GPS), the Russian Glonass system, the European Galileo system, any system that uses satellites from a combination of satellite systems, or any satellite system developed in the future. Use of the term SPS is contemplated to include a Global Positioning System (GPS), Galileo, GLONASS, NAVSTAR, GNSS, a system that uses satellites from a combination of these systems, or any SPS developed in the future. As used throughout, SPS will also be understood to include pseudolite systems.

Furthermore, the disclosed method and apparatus may be used with positioning determination systems that utilize pseudolites or a combination of satellites and pseudolites. Pseudolites are ground-based transmitters that broadcast a PN code or other ranging code (similar to a GPS or CDMA cellular signal) modulated on an L-band (or other frequency) carrier signal, which may be synchronized with GPS time. Each such transmitter may be assigned a unique PN code so as to permit identification by a remote receiver. Pseudolites are useful in situations where GPS signals from an orbiting satellite might be unavailable, such as in tunnels, mines, buildings, urban canyons or other enclosed areas. Another implementation of pseudolites is known as radio-beacons. The term "satellite", as used herein, is intended to include pseudolites, equivalents of pseudolites, and possibly others. The term "SPS signals", as used herein, is intended to include SPS-like signals from pseudolites or equivalents of pseudolites.

The methodologies described herein may be implemented by various means depending upon the application. For example, these methodologies may be implemented in hardware, firmware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof. For a firmware and/or software implementation, the methodologies may be implemented with modules (e.g., procedures, functions, and so on) that perform the functions described herein. Any machine readable medium tangibly embodying instructions may be used in implementing the methodologies described herein. Memory may be implemented within the processor or external to the processor. As used herein the term "memory" refers to any type of long term, short term, volatile, nonvolatile, or other memory and is not to be limited to any particular type of memory or number of memories, or type of media upon which memory is stored.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Although a description has been given with reference to particular aspects, it is to be understood that these embodiments are merely illustrative of the principles and applications. For instance, the foregoing is contemplated as being implemented entirely in software. It is therefore to be understood that numerous modifications may be made to the illustrative embodiments and that other arrangements may be devised without departing from the scope as defined by the appended claims. For instance, the foregoing is contemplated as being implemented entirely in software

## FURTHER EXAMPLES

1. An access point for a wireless network comprising:

a clock configured to generate clock timing signals;
a closed-loop filter coupled to said clock, said filter configured to cause synchronization of said clock timing signals with timing signals received from a network connected to the Internet; and
a processor configured to calibrate said clock.

2. An access point as recited in 1 wherein said filter is further operable to output timing offsets of said clock timing signals from timing signals received from a network connected to the Internet.

3. An access point as recited in 1 wherein the filter is a Kalman filter.

4. An access point as recited in 1 wherein said network is a Wide Area Network.

5. An access point as recited in 1 wherein said timing signal received from said network connected to the Internet are generated by a server implementing the Network Time Protocol.

6. An access point as recited in 1 wherein said processor is capable of calibrating said clock through use of hardware.

7. An access point as recited in 1 wherein said processor is capable of calibrating said clock through use of software.

8. An access point as recited in 1 wherein said timing signals received from said network connected to the Internet are synchronized with timing signals generated by a satellite positioning system.

9. An access point as recited in 8 wherein said satellite positioning system consists of GPS, Galileo, GLONASS, NAVSTAR, GNSS or a combination thereof.

10. A method of synchronizing a wireless network access point comprising:

receiving a timing signal from a satellite positioning system time source;
Kalman filtering said timing signal; and
calibrating a wireless access point clock using output from said Kalman filtering.

11. A method as recited in 10 wherein said timing signal is generated by a source implementing the Network Time Protocol.

12. A computer program product stored on a tangible medium that stores instructions which when executed by a processor causes Kalman filtering of data representative of a timing signal and determines calibration data for a wireless access point frequency source.

13. A computer program as recited in 12 wherein said timing signal is sourced from a satellite positioning system.

14. A computer program as recited in 13 wherein said satellite positioning system consists of GPS, Galileo, GLONASS, NAVSTAR, GNSS or a combination thereof.

15. A system for obtaining service through a secondary network comprising:

a Wi-Fi access point for a network coupled to the Internet, said access point including a clock configured to generate clock timing signals and a filter having a feedback loop coupled to said clock, said filter configured to cause synchronization of said clock timing signals with timing signals received from said secondary network; and
a processor configured to calibrate said clock and forwarding voice and data information to and from said secondary network

16. A system as recited in 15 wherein said secondary network is connected to the Internet.

17. A system as recited in 15 wherein said processor is capable of forwarding voice and data information to a mobile station having a wireless transceiver.

18. A system as recited in 17 which further includes a server for calculating information consisting of billing, determining access to features, mobile station positioning, navigation directions or a combination thereof, said server being capable of receiving requests from a mobile station consisting of mobile station positioning requests, mobile station navigation requests and a combination thereof.

19. A system as recited in 15 wherein said filter is a Kalman filter.

20. A system as recited in 15 wherein said network is a Wide Area Network.

21. A system as recited in 18 wherein said server is accessible through the Internet.

22. An access point means for providing wireless access to a network comprising:

a clock operable to generate clock timing signals;
recursive filter means coupled to said clock, said filter means being operable to cause synchronization of said clock timing signals with timing signals received from a network connected to the Internet and
a processor being capable of calibrating said clock.

**Claims**

1. An access point (12) for a wireless network comprising:

means (18) for generating local clock timing signals;
means for closed-loop filtering (14, 16), coupled to said means for generating (18), received timing signals directly from a source, wherein said means for closed-loop filtering determine a predicted state of the received timing signals based on an estimation of the timing signals from a previous time step forming an input for the means for closed-loop filtering (14, 16) for a current time step in order to provide estimated timing signals forming an output of the means for closed-loop filtering (14, 16) in the current time step, wherein each of the received timing signals is filtered by the means for closed-loop filtering (14, 16) until a difference for each received timing signal between the output of the means for closed-loop filtering (14, 16) in the current time step and the input of the means for closed-loop filtering (14, 16) in the current time step becomes zero;

means for calibrating said means for generating (18) based on the information from the means for closed-loop filtering in order to synchronize said local clock timing signals with said received timing signals.

2. An access point as recited in claim 1 wherein said means for filtering is a closed-loop filter operable to output timing offsets of said clock timing signals from timing signals received from a network connected to the Internet.

3. An access point as recited in claim 1 wherein the closed-loop filter is a Kalman filter,

4. An access point as recited in claim 1, wherein preferably said network is a Wide Area Network.

5. An access point as recited in claim 1, wherein said timing signal received from said network connected to the Internet are generated by a server implementing the Network Time Protocol.

6. An access point as recited in claim 1, wherein said processor is capable of calibrating said clock through use of hardware.

7. An access point as recited in claim 1, wherein said processor is capable of calibrating said clock through use of software.

8. An access point as recited in claim 1, wherein said timing signals received from said network connected to the Internet are synchronized with timing signals generated by a satellite positioning system.

9. An access point as recited in claim 8, wherein said satellite positioning system consists of GPS, Galileo, GLONASS, NAVSTAR, GNSS or a combination thereof.

10. A method of synchronizing a wireless network access point (12) comprising:

generating local clock timing signals;
filtering, in a recursive manner, timing signals received directly from a source, wherein said filtering is carried out using a closed-loop filter, and wherein the filtering comprises determining a predicted state of the received timing signals based on an estimation of the timing signals from a previous time step forming an input for closed-loop filtering for a current time step in order to provide estimated timing signals forming an output from the closed-loop filtering for the current time step, wherein filtering the received timing signals is carried out for each received timing signal until a difference for each received timing signal between the output of the filtering in the current time step and the input of the filtering in the current time step becomes zero; and calibrating the local clock timing signals based on the information from the filtering in order to synchronize said local clock timing signals with said received timing signals.

11. A method as recited in claim 10, wherein said timing signals are generated by a source implementing the Network Time Protocol.

12. A method as recited in claim 10, wherein said calibrating said local clock timing signals is performed at least partially via hardware or software.

13. A computer program product stored on a tangible medium that stores instructions which when executed by a processor causes the processor to carry out the method steps of any of claims 10 to 12.

**Patentansprüche**

1. Ein Zugriffspunkt (12) für ein drahtloses Netzwerk, wobei der Zugriffspunkt Folgendes aufweist:

Mittel (18) zum Erzeugen von lokalen Uhrzeitsignalen;
Mittel zum Closed-Loop Filtern (14, 16), welche mit den Mitteln zum Erzeugen (18) verbunden sind, und zwar von Zeitsignalen direkt von einer Quelle, wobei die Mittel zum Closed-Loop Filtern einen vorausgesagten Zustand der empfangenen Zeitsignale bestimmen, und zwar basierend auf einer Abschätzung der Zeitsignale von einem vorherigen Zeitschritt, wobei eine Eingabe für die Mittel zum Closed-Loop Filtern (14, 16) gebildet wird, und zwar für einen derzeitigen Zeitschritt, um abgeschätzte Zeitsignale bereitzustellen, welche eine Ausgabe der Mittel zum Closed-Loop Filtern (14, 16) in dem derzeitigen Zeitschritt bilden, wobei jedes der empfangenen Zeitsignale durch die Mittel zum Closed-Loop Filtern (14, 16) gefiltert wird, bis eine Differenz für jedes empfangene Zeitsignal zwischen der Ausgabe der Mittel zum Closed-Loop Filtern (14, 16) in dem derzeitigen Zeitschritt und der Eingabe der Mittel zum Closed-Loop Filtern (14, 16) in dem derzeitigen Zeitschritt null wird;
Mittel zum Kalibrieren der Mittel zum Erzeugen (18), und zwar basierend auf den Informationen von den Mitteln zum Closed-Loop Filtern, um die lokalen Uhrzeitsignale mit den empfangenen Zeitsignalen zu synchronisieren.

2. Ein Zugriffspunkt gemäß Anspruch 1, wobei das Mittel zum Filtern ein Closed-Loop Filter ist, welcher betreibbar ist zum Ausgeben von Zeit-Offsets der Uhrzeitsignale von Zeitsignalen, welche von einem Netzwerk empfangen wurden, welches mit dem Internet verbunden ist.

3. Ein Zugriffspunkt gemäß Anspruch 1, wobei der Closed-Loop Filter ein Kalman-Filter ist.

4. Ein Zugriffspunkt gemäß Anspruch 1, wobei bevorzugt das Netzwerk ein Wide Area Network ist.

5. Ein Zugriffspunkt gemäß Anspruch 1, wobei das Zeitsignal, welches von dem Netzwerk empfangen wurde, welches mit dem Internet verbunden ist, durch einen Server erzeugt wird, welcher das Network Time Protocol implementiert.

6. Ein Zugriffspunkt gemäß Anspruch 1, wobei der Prozessor ausgebildet ist zum Kalibrieren der Uhr durch die Verwendung von Hardware.

7. Ein Zugriffspunkt gemäß Anspruch 1, wobei der Prozessor ausgebildet ist zum Kalibrieren der Uhr durch die Verwendung von Software.

8. Ein Zugriffspunkt gemäß Anspruch 1, wobei die Zeitsignale, welche von dem Netzwerk empfangen werden, welches mit dem Internet verbunden ist, mit Zeitsignalen synchronisiert werden, welche durch ein Satellitennavigationssystem erzeugt werden.

9. Ein Zugriffspunkt gemäß Anspruch 8, wobei das Satellitennavigationssystem aus GPS, Galileo, GLONASS, NAVSTAR, GNSS oder einer Kombination davon besteht.

10. Ein Verfahren zum Synchronisieren eines drahtlosen Netzwerkzugriffspunkts (12), wobei das Verfahren folgende Schritte aufweist:

Erzeugen von lokalen Uhrzeitsignalen;
Filtern, in einer rekursiven Art und Weise, von Zeitsignalen, welche direkt von einer Quelle empfangen werden, wobei das Filtern durchgeführt wird unter Verwendung eines Closed-Loop Filters, und wobei das Filtern ein Bestimmen eines vorausgesagten Zustands der empfangenen Zeitsignale basierend auf einer Abschätzung der Zeitsignale von einem vorherigen Zeitschritt beinhaltet, wobei eine Eingabe für eine Closed-Loop Filterung für einen derzeitigen Zeitschritt erzeugt wird, und zwar zum Vorsehen von abgeschätzten Zeitsignalen, welche eine Ausgabe der Closed-Loop-Filterung des derzeitigen Zeitschritts bilden, wobei das Filtern der empfangenen Zeitsignale ausgeführt wird für jedes empfangene Zeitsignal, bis eine Differenz für jedes empfangene Zeitsignal zwischen der Ausgabe der Filterung in dem derzeitigen Zeitschritt und der Eingabe der Filterung in dem derzeitigen Zeitschritt null wird; und Kalibrieren der lokalen Uhrzeitsignale basierend auf der Information von der Filterung, um die lokalen Uhrzeitsignale mit den empfangenen Zeitsignalen zu synchronisieren.

**11.** Ein Verfahren gemäß Anspruch 10, wobei die Zeitsignale durch eine Quelle erzeugt werden, welche das Network Time Protocol implementiert.

**12.** Ein Verfahren gemäß Anspruch 10, wobei das Kalibrieren der Uhrzeitsignale mindestens teilweise über Hardware oder Software ausgeführt wird.

**13.** Ein Computerprogrammprodukt, welches auf einem greifbaren Medium gespeichert wird, welches Instruktionen speichert, welche, wenn sie durch einen Prozessor ausgeführt werden, verursachen, dass der Prozessor die Verfahrensschritte von einem der Ansprüche 10 bis 12 ausführt.


**Revendications**

**1.** Point d'accès (12) pour un réseau sans fil comprenant :

des moyens (18) pour générer des signaux de synchronisation d'horloge locaux ;
des moyens, couplés auxdits moyens de génération (18), pour filtrer en boucle fermée (14, 16) des signaux de synchronisation reçus directement d'une source, dans lesquels lesdits moyens de filtrage en boucle fermée déterminent un état prédit des signaux de synchronisation reçus, à partir d'une estimation des signaux de synchronisation d'une étape temporelle précédente constituant une entrée pour les moyens de filtrage en boucle fermée (14, 16) pour une étape temporelle courante, de façon à fournir des signaux de synchronisation estimés constituant une sortie des moyens de filtrage en boucle fermée (14, 16) dans l'étape temporelle courante, chacun des signaux de synchronisation reçus étant filtré par les moyens de filtrage en boucle fermée (14, 16) jusqu'à ce que, pour chaque signal de synchronisation reçu, une différence entre la sortie des moyens de filtrage en boucle fermée (14, 16) dans l'étape temporelle courante et l'entrée des moyens de filtrage en boucle fermée (14, 16) dans l'étape temporelle courante s'annule ;
des moyens pour calibrer lesdits moyens de génération (18) à partir des informations provenant des moyens de filtrage en boucle fermée de façon à synchroniser lesdits signaux de synchronisation d'horloge locaux avec lesdits signaux de synchronisation reçus.

**2.** Point d'accès selon la revendication 1, dans lequel lesdits moyens de filtrage sont constitués d'un filtre en boucle fermé utilisable pour fournir des décalages temporels desdits signaux de synchronisation d'horloge à partir de signaux de synchronisation reçus d'un réseau connecté à Internet.

**3.** Point d'accès selon la revendication 1, dans lequel le filtre est un filtre de Kalman.

**4.** Point d'accès selon la revendication 1, dans lequel ledit réseau est de préférence un réseau étendu.

**5.** Point d'accès selon la revendication 1, dans lequel lesdits signaux de synchronisation reçus dudit réseau connecté à Internet sont générés par un serveur mettant en oeuvre le protocole d'heure réseau.

**6.** Point d'accès selon la revendication 1, dans lequel ledit processeur est capable de calibrer ladite horloge de façon matérielle.

**7.** Point d'accès selon la revendication 1, dans lequel ledit processeur est capable de calibrer ladite horloge de façon logicielle.

**8.** Point d'accès selon la revendication 1, dans lequel lesdits signaux de synchronisation reçus dudit réseau connecté à Internet sont synchronisés avec des signaux de synchronisation générés par un système de positionnement par satellite.

**9.** Point d'accès selon la revendication 8, dans lequel ledit système de positionnement par satellite consiste en GPS, Galileo, GLONASS, NAVSTAR, GNSS ou une combinaison de ceux-ci.

**10.** Procédé de synchronisation d'un point d'accès réseau sans fil (12) comportant :

la génération de signaux de synchronisation d'horloge locaux ;
le filtrage, de façon récursive, de signaux de synchronisation reçus directement d'une source, lesdits moyens de filtrage étant mis en oeuvre en utilisant un filtre en boucle fermée et le filtrage comprenant la détermination d'un état prédit des signaux de synchronisation reçus, à partir d'une estimation des signaux de synchronisation d'une étape temporelle précédente constituant une entrée pour le filtrage en boucle ferme pour une étape temporelle courante, de façon à fournir des signaux de synchronisation estimés constituant une sortie du filtrage en boucle fermée pour l'étape temporelle courante, dans lequel le filtrage des signaux de synchronisation reçus est effectué, pour chaque signal de synchronisation reçu, jusqu'à ce que, pour chaque signal de synchronisation reçu, une différence entre la sortie du filtrage dans l'étape temporelle courante et l'entrée du filtrage dans l'étape temporelle courante, s'annule ; et

la calibration des signaux de synchronisation d'horloge locaux à partir des informations issues du filtrage pour synchroniser lesdits signaux de synchronisation d'horloge locaux avec lesdits signaux de synchronisation reçus.

11. Procédé selon la revendication 10, dans lequel lesdits signaux de synchronisation sont générés par une source mettant en oeuvre le protocole d'heure réseau.

12. Procédé selon la revendication 10, dans lequel ladite calibration desdits signaux de synchronisation d'horloge locaux est mise en oeuvre au moins partiellement de façon matérielle ou logicielle.

13. Produit programme informatique stocké sur un support tangible qui stocke des instructions qui, lorsqu'elles sont exécutées par un processeur, font que le processeur met en oeuvre les étapes de procédé de l'une quelconque des revendication 10 à 12.

# Fig. 1

# Fig. 2

```
        ▽
      Start

   ┌──────────┐
   │ Receive  │
   │ Timing   │
   │ Signals  │
   │  from    │
   │ Network  │
   └──────────┘
        │
   ┌──────────────┐
   │Perform closed-│
   │Loop Filtering of│
   │Timing Signals │
   └──────────────┘
        │
   ┌──────────┐
   │ Feed back │
   │difference │
   │ between   │
   │filter input│
   │and output │
   └──────────┘
        │
   ┌──────────────┐
   │Calibrate clock│
   │  based on     │
   │synchronization│
   │  difference   │
   └──────────────┘
```

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004072582 A1
- WO 03058863 A
- WO 20078051123 A

**Non-patent literature cited in the description**

- **E. FILHO ; H. KUGA ; R. LOPES.** Real Time Estimation of GPS Receiver Clock Offset by the Kalman Filter. *Proceedings of COBEM 2003, 17th International Congress of Mechanical Engineering,* 2003